# EUROPÄISCHE PATENTSCHRIFT

(11) **EP 1 585 912 B1**
(45) Veröffentlichungstag und Bekanntmachung des Hinweises auf die Patenterteilung: **25.07.2007**
(21) Anmeldenummer: 04704596.8
(22) Anmeldetag: 23.01.2004
(51) Int. Cl.: F16H 7/08, F01L 1/02

(54) **BAUEINHEIT MIT EINER HÜLSE FÜR KETTENTRIEBE**
MODULAR UNIT COMPRISING A BUSH FOR CHAIN DRIVES
UNITE MODULAIRE MUNIE D'UN MANCHON POUR TRANSMISSION PAR CHAINE

(30) Priorität: 25.01.2003 DE 10302876
(43) Veröffentlichungstag der Anmeldung: 19.10.2005
(73) Patentinhaber: Schaeffler KG, 91074 Herzogenaurach (DE)
(72) Erfinder: KOCH, Reinhard, 96193 Wachenroth (DE)
(86) Internationale Anmeldenummer: PCT/EP2004/000536
(87) Internationale Veröffentlichungsnummer: WO 2004/067999

(56) Entgegenhaltungen:
- EP-A- 0 553 474
- DE-A- 19 807 822
- DE-C- 3 706 136
- DE-C- 19 714 763

## Beschreibung

### Gebiet der Erfindung

Die Erfindung betrifft eine Baueinheit mit einer metallischen Hülse, welche in einen Kunststoff-Tragkörper für eine als Spannschiene oder Führungsschiene des Kettentriebes eines Verbrennungsmotors ausgebildete Schiene eingesetzt und an dem Motorgehäuse axial anliegend mit einer durch die Hülse hindurchgesteckten Schraube befestigt ist, wobei die Hülse als rotationssymmetrischer Körper ausgebildet und in ein Befestigungsloch des Tragkörpers eingesteckt ist, wobei sie in ihrem dem Motor zugewandten Endbereich eine ringförmige Stufe für den Übergang zu einem reduzierten Außendurchmesser aufweist, mit welcher sie an einem innerhalb des Befestigungslochs des Tragkörpers ausgebildeten, einen reduzierten Innendurchmesser aufweisenden Absatz axial gehalten ist.

### Hintergrund der Erfindung

Zur Befestigung von Kunststoff-Spann- und Führungsschienen für Kettentriebe werden entweder Bundschrauben oder in den Kunststoffträger eingepresste oder nach dem Ultraschallverfahren eingesenkte Hülsen verwendet. Dieses ist notwendig, da der Kunststoff ohne Hülse unter der Last der Schraube fließen würde und die Schraube keine Vorspannung mehr aufbringen könnte. Als Folge würde sie sich im Betrieb lösen. Bei Spannschienen wird meist eine am Außendurchmesser geschliffene Schraube verwendet, auf der die Schiene sich verschleißarm verschwenken kann.

Damit bekannte Hülsen in den Tragkörpern von Führungsschienen an ihrem Einbauort verbleiben, sind oft an ihren Außendurchmessern in aufwendiger Weise Rändel angebracht. Eine Vorabmontage der Schrauben für die Spannschiene ist kaum möglich. Ein weiteres Problem stellen Führungsschienen dar, die zwei oder mehr Befestigungspositionen haben. Hier ist stets mindestens eine der Befestigungspositionen als Langloch oder als übergroße Bohrung ausgeführt, um Bauteiltoleranzen und Wärmedehnungen auszugleichen. Dies verschlechtert die Genauigkeit der Positionierung der Schiene.

Aus dem Dokument DE 43 41 019 A1 ist eine Baueinheit bekannt, in der Hülsen in zwei unterschiedlichen konstruktiven Ausführungen erforderlich sind, und zwar eine Metallhülse für die Lagerung einer Spannschiene und eine Befestigungsbuchse für eine Führungsschiene.

Das gattungsgemäße Dokument DE 198 07 822 A1 zeigt eine Baueinheit der eingangs genannten Art, bei welcher ein Spannhebel für eine Antriebskette an einem Ende schwenkbar gelagert ist. Hierfür genügt eine einzige in dem Spannhebel angeordnete Hülse. Als Schwenkachse dient ein Bundbolzen, der durch die Hülse hindurchgesteckt und in den Motor von dessen Montagefläche aus eingeschraubt ist.

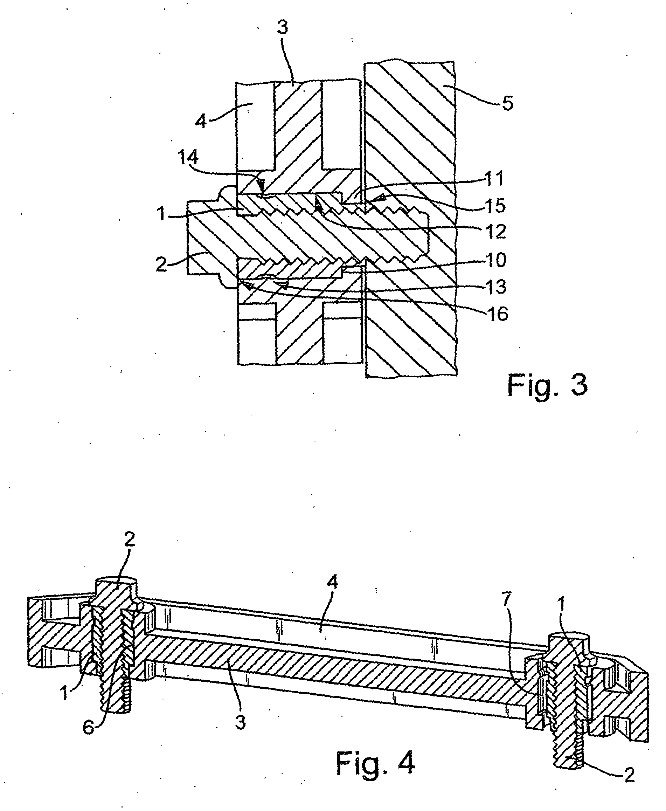

Aus dem Dokument DE 37 06 136 C1 ist ein Kettenspanner einer Brennkraftmaschine bekannt, der aus einem Träger aus Kunststoff und einem Kunststoff-Gleitbelag besteht, welcher über Schwalbenschwanzverbindungen an dem Träger befestigt ist. Die Halterung des Kettenspanners erfolgt an zwei Lagerbolzen der Brennkraftmaschine, die in Lageraugen des Trägers eingesetzt sind. In ein Lagerauge ist eine metallische Büchse eingesetzt und dort mittels eines von der äußeren Oberfläche der Büchse abstehenden Bundes am Träger gesichert. Wie Figur 3 zeigt, befindet sich der von der metallischen Hülse außen abstehende Bund passend in einer inneren Umfangsnut des Trägers im Bereich von dessen Lagerauge. Das andere Lagerauge ist mit einer Art Schlitzbohrung versehen. In dieses ist ein Lagerbolzen unmittelbar eingesteckt. Eine metallische Büchse enthält das andere Lagerauge nicht.

### Zusammenfassung der Erfindung

Der Erfindung liegt die Aufgabe zu Grunde, eine Baueinheit mit einer Hülse zu entwickeln, bei welcher die Hülse einfach herzustellen ist und auf Grund ihrer Einfachheit in zahlreichen Anwendungen und Komponenten Verwendung finden kann, so dass die zu erwartende Stückzahl entsprechend groß ist.

Diese Aufgabe wird erfindungsgemäß dadurch gelöst, dass das Befestigungsloch des Tragkörpers als Referenzbohrung bzw. primäres Befestigungsloch ausgebildet ist und dass in dem Tragkörper zusätzlich zu der Referenzbohrung ein sekundäres Befestigungsloch angeordnet ist, welches als Langloch ausgebildet ist, in das eine mit der Hülse für die Referenzbohrung konstruktiv gleich ausgeführte Hülse eingesetzt ist. Die Hülsen werden in die Tragkörper der Schienen eingeclipst, ihre Montage ist also ohne größeren Aufwand möglich. Bei der erfindungsgemäßen Ausführung werden keine zusätzlichen Spannungen in das Kunststoffteil eingebracht, wie dies z. B. bei eingepressten Hülsen der Fall ist.

### Kurze Beschreibung der Zeichnung

Ein Ausführungsbeispiel der Erfindung ist in der Zeichnung dargestellt und wird im Folgenden näher beschrieben. Es zeigen
- Figur 1: eine perspektivische Ansicht einer Schiene mit zwei Befestigungslöchern und oberhalb jedes Befestigungslochs eine Hülse und eine Schraube in explosionsartiger Darstellung;
- Figur 2: einen vergrößerten Ausschnitt aus der Schiene mit einem als Langloch ausgebildeten Befestigungsloch und darin eingesetzter Hülse;
- Figur 3: einen Schnitt durch den Befestigungsbereich einer Schiene an einem Motorgehäuse;
- Figur 4: einen Figur 1 entsprechenden Schienenteil, der längs einer durch die Hülsenachsen verlaufenden Ebene abgeschnitten ist.

### Ausführliche Beschreibung der Zeichnung

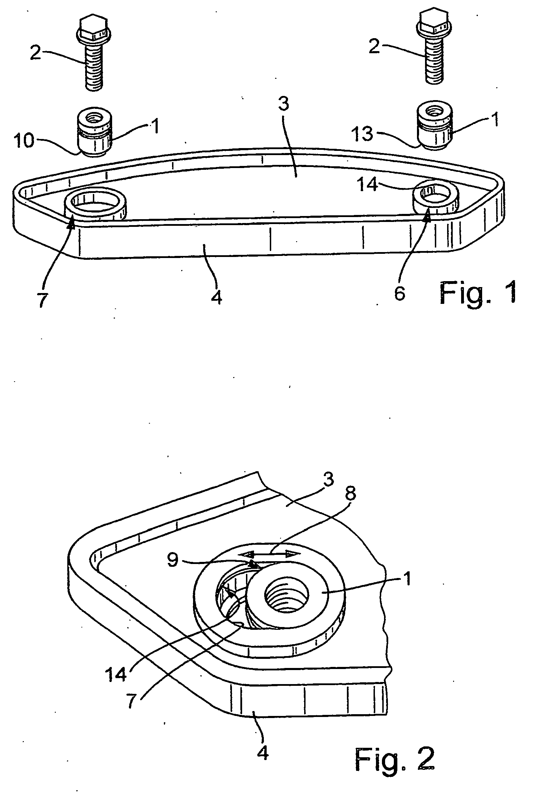

Eine Hülse 1 ist in ihrer Bauform als rotationssymmetrischer Körper ausgebildet. Zentrisch ist in die Hülse 1 in axialer Richtung eine Durchgangsbohrung für eine Befestigungsschraube 2 eingebracht. Die Hülse 1 dient zur Befestigung eines Tragkörpers 3 für eine als Führungs- oder Spannschiene ausgebildete Schiene 4 an einem Motorgehäuse 5. Der Tragkörper weist ein als Referenzbohrung 6 ausgebildetes primäres Befestigungsloch und ein von diesem entferntes, als Langloch 7 ausgebildetes sekundäres Befestigungsloch auf. Wie sich aus den Figuren 1 und 4 eindeutig ergibt, hat die Schiene 4 zwei Befestigungslöcher, wobei für jedes Befestigungsloch eine Hülse 1 vorgesehen ist. Dabei sind die Hülse 1 für die Referenzbohrung 6 und die Hülse 1 für das Langloch 7 konstruktiv gleich ausgeführt. Die Hülse 1, welche sich im Langloch 7 befindet, lässt sich darin in einer Verschieberichtung 8 achsparallel verschieben. Zwischen der Hülse 1 und dem Langloch 7 ist quer zur Verschieberichtung 8 ein minimales Spiel 9 vorhanden. Auch die Durchgangsbohrung der Hülse 1 kann mit minimalem Spiel zur Schraube 2 ausgeführt sein. Dies verbessert die Toleranzsituation im Vergleich zu bekannten Lösungen deutlich.

In einem Endbereich der Hülse 1 befindet sich jeweils eine ringförmige Stufe 10 für den Übergang zu einem reduzierten Außendurchmesser. Diese Stufe ist im Zusammenspiel mit dem Tragkörper 3 der in Figur 3 verwendeten Schiene 4 so ausgelegt, dass sie bei dem Tragkörper 3 an einem in dem Befestigungsloch ausgebildeten Absatz 11 beim Anschrauben gehalten wird. Zu dem Tragkörper 3 hält die Hülse 1 einen kleinen Spalt 12 ein, so dass sich die Schiene stets verschwenken lässt. Mit dieser Konturgestaltung wird die Schiene in axialer Richtung des Motors gesichert. Auch zwischen der Schraube 2 und der Bohrung der Hülse 1 ist ein minimaler Spalt möglich.

Des Weiteren befindet sich am Außendurchmesser der Hülse 1 jeweils als Einstich eine Nut 13. Dieser Einstich ist vorteilhaft nicht mittig eingebracht, so dass die Hülse 1 nicht falsch montiert werden kann.

Im Bohrungsbereich des Tragkörpers 3 für die Schiene befindet sich jeweils ein kleiner, an der Wandung ausgebildeter Wulst 14, welcher den Bohrungsdurchmesser partiell reduziert. Statt des Wulstes 14 können auch einzelne Wulstsegmente angeordnet sein. Der Wulst 14 rastet in die Nut 13 der Hülse 1 ein, wenn die Hülse 1 in das Befestigungsloch des Tragkörpers 3 eingesteckt wird. Auf diese Weise wird die Hülse 1 beim Transport gegen Herausfallen gesichert. Die Einstichbreite ist so zu wählen, dass der Wulst 14 nach erfolgter Montage frei in der Nut 13 liegt.

Um die Bewegungsfreiheit des Tragkörpers 3 und der Schiene 4 zu gewährleisten, ist die Hülse 1 an ihren axialen Enden mit Überständen 15 und 16 versehen, so dass sie im Bereich des Befestigungsloches über die Länge des Werkstoffs des Tragkörpers 3 hinausragt. Bei Verwendung der Hülse 1 an als Führungsschienen ausgebildeten Schienen 4 wird der Absatz 11 so ausgelegt, dass die Stufe 10 der Hülse 1 den Tragkörper 3 spielfrei zum Motorgehäuse 5 sichert.

Bei Langlöchern in den Tragkörpern 3 von Führungsschienen kann jeweils in Längsrichtung eines solchen Befestigungsloches ebenfalls an der Wandung ein kleiner Wulst 14 als Vorsprung angeordnet sein. Nachdem die Hülse 1 eingeclipst worden ist, kann sie in Längsrichtung des Langloches 7, also achsparallel in Bezug auf die Hülse, frei verschoben werden, bis sie mit der Bohrung für die Schraube 2 am Motorblock 5 fluchtet. Da die Bohrung der Hülse 1 nur unwesentlich größer als der Spalt der Schraube 2 ist und zudem die Hülse 1 bündig in dem Tragkörper 3 der Führungsschiene 4 eingeschnappt ist, können hier zusätzlich Positionierungstoleranzen reduziert werden. Auch hier soll bei der Auslegung gelten: Wird die Hülse 1 angeschraubt, so klemmt die Stufe 10 den Absatz 11 im Kunststoff des Tragkörpers 3 der Schiene, so dass eine sichere Fixierung gewährleistet ist.

Da es sich bei der erfindungsgemäßen Hülse 1 um ein rotationssymmetrisches Bauteil ohne Vorsprünge handelt, kann ihr Außendurchmesser centerless geschliffen werden. Das ist deutlich günstiger als das Einstichschleifen bei Bundschrauben.

Die Montage der Hülse 1 kann mit einer einfachen Montagevorrichtung, z. B. einer Handhebelpresse, erfolgen. Im Vergleich dazu werden beim Einsenken nach dem Ultraschallverfahren aufwendige Maschinen benötigt. Das Ultraschallverfahren erfordert zudem einen hohen Energieaufwand.

Bei Verwendung der Hülse 1 an als Führungsschienen ausgebildeten Schienen 4 ist der Absatz 11 des Tragkörpers 3 vorteilhaft so ausgelegt, dass er von der Stufe 10 der Hülse 1 an dem Motorgehäuse 5 verklemmt wird.

Baugleiche Hülsen können also für eine Spannschiene und für eine Führungsschiene verwendet werden. Die Hülsen sind in den Schienen eingeclipst und verbleiben dort. Der Wulst und die Nut sind so ausgelegt, dass die in dem Tragkörper vormontierte Hülse sich infolge des Spiels in der Wulst-Nut-Anordnung frei bewegen kann. Vor der Montage am Motorgehäuse erfolgt keine axiale Fixierung der Schiene durch die Wulst-Nut-Konstruktion, diese Anordnung dient nur der Transportsicherung. Durch die Bauform der erfindungsgemäßen Hülse können eine optimale Passform und hohe Oberflächenqualitäten garantiert werden. Die Hülsen sind komplett vom Schienenkörper umfasst.

### Bezugszahlenliste

- 1: Hülse
- 2: Befestigungsschraube
- 3: Tragkörper
- 4: Führungs- oder Spannschiene
- 5: Motorgehäuse, Motorblock
- 6: Referenzbohrung
- 7: Langloch
- 8: Verschieberichtung
- 9: minimales Spiel
- 10: Stufe
- 11: Absatz
- 12: Spalt
- 13: Nut
- 14: Wulst
- 15: Überstand
- 16: Überstand

## Patentansprüche

1. Baueinheit mit einer metallischen Hülse (1), welche in einen Kunststoff-Tragkörper (3) für eine als Spannschiene oder Führungsschiene des Kettentriebes eines Verbrennungsmotors ausgebildete Schiene (4) eingesetzt und an dem Motorgehäuse (5) axial anliegend mit einer durch die Hülse (1) hindurchgesteckten Schraube (2) befestigt ist, wobei die Hülse (1) als rotationssymmetrischer Körper ausgebildet und in ein Befestigungsloch des Tragkörpers (3) eingesteckt ist, wobei sie in ihrem dem Motor zugewandten Endbereich eine ringförmige Stufe (10) für den Übergang zu einem reduzierten Außendurchmesser aufweist, mit welcher sie an einem innerhalb des Befestigungslochs des Tragkörpers (3) ausgebildeten, einen reduzierten Innendurchmesser aufweisenden Absatz (11) axial gehalten ist, **dadurch gekennzeichnet, dass** das Befestigungsloch des Tragkörpers (3) als Referenzbohrung (6) bzw. primäres Befestigungsloch ausgebildet ist und dass in dem Tragkörper (3) zusätzlich zu der Referenzbohrung (6) ein sekundäres Befestigungsloch angeordnet ist, welches als Langloch (7) ausgebildet ist, in das eine mit der Hülse (1) für die Referenzbohrung (6) konstruktiv gleich ausgeführte Hülse (1) eingesetzt ist.

2. Baueinheit nach Anspruch 1, **dadurch gekennzeichnet, dass** der Tragkörper (3) mit dem Befestigungsloch von der Schiene (4) umgeben und mit dieser als Kunststoffteil ausgebildet ist.

3. Bauteil nach Anspruch 1, **dadurch gekennzeichnet, dass** im Bohrungsbereich der Referenzbohrung (6) und/oder des Langlochs (7) ein an der Wandung angeordneter Wulst (14) ausgebildet ist, welcher sich in einer ringförmigen Nut (13) der eingesetzten Hülse (1) befindet.

## Claims

1. Modular unit having a metallic sleeve (1) which is inserted into a plastic carrying body (3) for a rail (4) which is configured as a tensioning rail or a guide rail of the chain drive of an internal combustion engine, and which is fastened to the engine housing (5) in an axially bearing manner by way of a screw (2) which is plugged through the sleeve (1), the sleeve (1) being configured as a rotationally symmetrical body and being plugged into a fastening hole of the carrying body (3), the said sleeve (1), in its end region which faces the engine, having an annular step (10) for the transition to a reduced external diameter, by way of which annular step (10) it is held axially on a section (11) which is formed within the fastening hole of the carrying body (3) and has a reduced internal diameter, **characterized in that** the fastening hole of the carrying body (3) is configured as a reference hole (6) or primary fastening hole, and **in that**, in addition to the reference hole (6), a secondary fastening hole is arranged in the carrying body (3), which secondary fastening hole is configured as a slot (7), into which a sleeve (1) is inserted which is of structurally identical configuration to the sleeve (1) for the reference hole (6).

2. Modular unit according to Claim 1, **characterized in that** the carrying body (3) with the fastening hole is surrounded by the rail (4) and is configured with the latter as a plastic part.

3. Modular unit according to Claim 1, **characterized in that** a bead (14) which is arranged on the wall and is situated in an annular groove (13) of the inserted sleeve (1) is configured in the hole region of the reference hole (6) and/or of the slot (7).

## Revendications

1. Unité modulaire munie d'un manchon métallique (1), qui est introduit dans un corps de support en matière plastique (3) pour un rail (4) formant un rail de tension ou un rail de guidage de la transmission à chaîne d'un moteur à combustion interne et qui est fixé en application axiale sur le boîtier du moteur (5) avec une vis (2) traversant le manchon (1), dans laquelle le manchon (1) est un corps à symétrie de révolution et est inséré dans un trou de fixation du corps de support (3), dans laquelle il présente, dans sa région d'extrémité tournée vers le moteur, un épaulement annulaire (10) assurant la transition vers un diamètre extérieur réduit, avec lequel il est maintenu axialement sur un épaulement (11) formé à l'intérieur du trou de fixation du corps de support (3) et présentant un diamètre intérieur réduit, **caractérisée en ce que** le trou de fixation du corps de support (3) est un alésage de référence (6) ou un trou de fixation primaire et **en ce qu'**il se trouve dans le corps de support (3), en plus de l'alésage de référence (6), un trou de fixation secondaire qui est un trou oblong (7), dans lequel est introduit un manchon (1) de même structure que le manchon (1) pour l'alésage de référence (6).

2. Unité modulaire selon la revendication 1, **caractérisé en ce que** le corps de support (3) avec le trou de fixation est entouré par le rail (4) et est formé en une pièce de matière plastique avec celui-ci.

3. Unité modulaire selon la revendication 1, **caractérisée en ce que**, dans la région de perçage de l'alésage de référence (6) et/ou du trou oblong (7), on a formé sur la paroi un bourrelet (14), qui se trouve dans une rainure annulaire (13) du manchon introduit (1).
